# EUROPEAN PATENT APPLICATION

(11) **EP 2 077 564 A1**
(43) Date of publication of application: **08.07.2009**
(21) Application number: 08380271.0
(22) Date of filing: 18.09.2008
(51) Int. Cl.: G21F 1/04

(54) **Heavy mass for the execution of radioprotection barriers in an x-ray environment**

(30) Priority: 21.12.2007 ES 200703404
(71) Applicant: Construcciones Tecnicas de Radioterapia, S.L., 45007 Toledo (ES)
(72) Inventor: Caruncho Rodado, Juan Manuel, 45007 Toledo (ES)
(74) Representative: Gonzalez Gomez, Maria Virtudes

(57) **Abstract**

Specially designed to form a high capacity barrier for radioprotection in the X-ray range, a mass for producing mortar, bricks, blocks or tiles, involving the incorporation of cement, aggregate, water and chemical additives varying in accordance with the features that may be required for this mass, such as strength, setting time and others, the invention focuses its characteristics on the fact that, as an aggregate barite plays a part in it in a suitable proportion according to the increase in the general density of the mass to be obtained, a highly continuous grain size being envisaged for said barite as well as a system of differential vibrating, except in the case of the mortar, with a view to obtaining optimal consistency in the mass.

## Description

### OBJECT OF THE INVENTION

The present invention refers to a heavy mass, specially designed to act as a high-capacity barrier of radioprotection in the X-ray range.

The object of the invention is to provide a mass by way of a covering for the partition walls of sealed X-ray enclosures.

The invention is applicable to any radiological protection system, in the environment of conventional X-rays normally used in the hospital diagnosis process (Conventional Radiology and CAT) since, due to the atomic structure of the main component of the aggregate used, BARIUM, it is more effective in the capture of the particles present in the above-mentioned X-ray beams than other masses that use aggregates of lower Z and, therefore, more effective in the radioprotection effect sought, taking into account that the photoelectric effect is the main mechanism of photon interaction with matter and the range of energies in which X-rays are produced.

A magnitude of common use for expressing the attenuation of a radiation beam is the half-reduction layer (HRL), i.e. the width of "absorbent" needed to reduce the initial intensity of the radiation by half.

As the invention lies in the development of armouring systems for energies below 500 keV, the mechanisms of interaction of photons with matter are the photoelectric effect and the Compton effect for this range of energies, the photoelectric effect being more probable in this region. Since the effective section of photoelectric absorption is proportional in a first approach to Z⁵, that is to say highly dependent on the atomic number of the absorbent material, 56 in the case of Barium, the main component of Barite, its use as the basis of this product is optimal.

The heavy mass of this invention, therefore, lies in the field of the manufacture of raw materials and building products to be used in the construction of sealed X-ray enclosures.

All this fulfils a concept of biosustainability of a product which is not only environment-friendly but which also provides an alternative to the use of such a highly polluting material as lead.

The applications of the product of the invention will preferably be the cladding of walls and/or partitions with a fine or medium finish. This cladding may be topped with any finish, such as paint, paper, textile fibres, etc.

With a suitable granulometric curve generation, this same mass may be used as the base for prefabricated elements, when so required to meet not only the needs of the project and on-site placement, but also because of the impossibility of achieving substantial mortar covering thicknesses on vertical surfaces due to the great weight of the mass of the product.

Another aim of this invention is to provide a cement mortar that is in powder form contains no water at all (obviously water will have to be added to the cement mix just before using the mortar), while it contains additives specific to its form of application that will permit the addition of a smaller amount of water to the mortar at the time of using it (increasing thereby the mechanical strength of the layer of set mortar). Suitable care has to be given to this aspect during application to prevent the layer of this mortar sliding downwards when applied to a vertical wall. An effort should also be made to prevent cracks forming and the possible crumbling of the mass since the mass of this mortar is very high in comparison with the masses of the mortars normally used in building.

### BACKGROUND OF THE INVENTION

The armouring systems for areas requiring radioprotection lie within the above-mentioned energies of less than 500 keV with regard to photoelectric effect, but they will usually be applied in conventional radiology areas, with energies in the region of 150 keV and less. This area of working and use is the main aim of the application of the material in the present development.

The radioprotection of the above-mentioned areas is usually achieved in the following way:
- Lining of the walls with 2 mm lead sheets, suitable solely from the point of view of radioprotection, as the Z of lead is 82 and, therefore, highly effective at these energies, but it presents the following problems:
   - Polluting material both in handling and in use.
   - High cost of raw material, continually on the increase.
   - High cost of placement, requiring it either to come bonded to a laminated plaster panel or for this panel to be set in place separately, or else a brick wall with its respective plastering in order to be able to apply the standard appropriate finish treatment.
   - In case of fire, owing to its low melting point, lead generates fumes very quickly and these are highly contaminating and toxic.
- Bricks made with barite, with other manufacturing formats and formulas, with lower densities and at least 6 cm thick with standard mortar, so it has to come grooved and tongued, with the result that the labour and material costs to assure suitable armouring is high.
- Producers of micronized barite powder, not suitable for making a mortar mass, as may be seen in any professional literature on mortar generation, as mortar is not executed with a single granulometric fraction, and it is essential for the use of barite only for the execution of masses of this type with suitable absorption capacity.

### DESCRIPTION OF THE INVENTION

The heavy mass for the execution of radioprotection barriers proposed by the invention presents a composition which enables a high degree of the above-mentioned energy "absorption" characteristic to be achieved, including in this composition as an aggregate barite, which will be subjected to prior treatment.

The prior treatment of the mineral and the decision on the mixing of its fractions and what fractions these are make this step a basic one in the process, which has a very positive effect both on the densities obtained and on the consistency of the mass, assisting in the high quality of the product.

As mentioned above, the mass is applicable both for obtaining mortar of different thicknesses, tiles, as well as bricks or blocks, all of them with the same purpose of forming a protection barrier against X-rays.

For each application test a specific sample has been generated, with suitable thicknesses, such as for instance M1 of 1.111 for mortar, M2 of 2.150 cm for producing tiles for producing thin tiles, M3 of 2.995 cm for producing thicker tiles, and M5 of 5.122 cm for making bricks/blocks.

Only cement, water, barite and the most appropriate additive for the application are used in these samples, except in the initial sample (mortar), to which metal fibre has been added to endow it with cohesion and suitable strength for such a low thickness.

In this respect, tests have been performed with the following beam qualities

| ***QUALITY*** | ***TUBE VOLTAGE TUBO (kV)*** | ***HRL (mm Al)*** |
|---|---|---|
| RQR8 | 100 | 3.6 |
| RQR7 | 90 | 3.2 |
| D-60 | 60 | 2.2 |

The following data have been obtained with regard to lead equivalencies for the specified samples. M1 is the Mortar sample, M2 and M3 are samples of Tiles, and M5 samples of BricksBlocks:

| | ***SAMPLE*** | | | |
|---|---|---|---|---|
| ***QUALITY*** | ***M1* / *cm Pb*** | ***M2* / *cm Pb*** | ***M3* / *cm Pb*** | ***M5* / *cm Pb*** |
| RQR8 | 0.24 | 0.42 | - | - |
| RQR7 | 0.29 | 0.94 | - | - |
| D-60 | 0.67 | - | - | - |

Sample equivalencies are referenced to Lead (cm.). It has not been possible to establish the equivalencies indicated with (-) accurately because the ambient dose equivalent rate result after the corresponding sample is too small and the ambient background measurement, from which its high absorption is deduced, too close.

From the measurements taken, we may determine the attenuation factors as quotients of ambient dose equivalent rates. The results are as shown in the following table:

| | ***SAMPLE*** | | | |
|---|---|---|---|---|
| ***QUALITY*** | ***M1*** | ***M2*** | ***M3*** | ***M5*** |
| ***RQR8*** | 6.81E+03 | 2.88E+05 | 2.92E+06 | 6.33E+06 |
| ***RQR7*** | 1.92E+04 | 1.32E+06 | 1.08E+07 | 7.78E+06 |
| ***D-60*** | 7.38E+05 | 7.11E+06 | 8.43E+06 | 1.97E+07 |

This means that in a conventional X-ray room we may replace the usual 2 mm of lead with 9 mm of this mass, with the above-mentioned advantages entailed for the quality of the beam corresponding to it.

The cements that may be used are Portland type 42.5 or 52.5 along with calcium aluminate cements in proportions, overall and by weight, which should range between 7 and 20%, depending on the type of application and conditions. The proportion of one type of cement and another will also vary between the type of application and use.

The mineral loads have a maximum particle size of 20 mm, depending on whether the mass is presented in mortar, tiles, medium-sized bricks and/or blocks. This mineral load will vary between 78 % and 89 % by weight. The granulometric curve is very important and it should be as close as possible to Fuller's in any of the ranges to be used, generated artificially by means of a mix of fractions obtained previously by means of industrial screening. The chemical additives used in the manufacture of the mass in accordance with the use to which it is put, its nature and performance are as follows:
- Acrylic resin as flexural strength and adhesion booster. The proportions to be used vary between 2 and 5% of the weight of cement.
- Superplastifier and superfluidifier belonging mostly to the vinyl polymer class. The proportions to be used will be between 0.05 % and 2.3 % of the weight of cement.
- Water-retaining additives to improve the hydration of the cement and its adhesion. Batching will be in the range of 0.3 % and 1.2 %, of the weight of cement.
- Setting accelerator additive for dry process spray mortars with batchings ranging from 2.5 % to 7 % of the weight of cement, with the following objectives.
   - Faster setting.
   - Faster hardening.
   - Improved adhesion.
   - Enhanced impermeability to reduce rejection during spraying.
Likewise, as physical elements for use in the different formats for using this mass, by way of ancillary application elements, we will have:
- Polypropylene to be used only in spray mortars and in tiles of not excessive thickness in order to confer strength. It should be remembered that the size of the fibres must be at least double the size of the maximum aggregate.
- Steel fibres as an alternative to propylene fibres, for the same purpose, although special care will have to be taken over the choice in view of the rejection existing in spray mortars.
- Electro-welded mesh preferably of galvanized wire or wrought iron, with wire diameters of 0.9 to 2 mm, with a mesh size of between 6 mm and 50 mm, in accordance with the dimensions of the wall, primarily as regards it height and the thickness of the mortar to be applied, depending on the coefficient of radioprotection required.

Spacers consisting of blocks and standard screws which, together with washers, secure the mesh at a distance from the wall that must not exceed 8 or 9 mm. This system performs the dual function of, on the one hand, reinforcement, and on the other, helping the mortar not to slip under its own weight during the setting process.

### PREFERRED EMBODIMENT OF THE INVENTION

As mentioned above, the heavy mass proposed by the invention enables different presentations to be produced for use in the manufacture of blocks, tiles and mortars, by means of including barite in the production process.

In the case of brickmaking, the mineral granulometric fractions which have been used, expressed in mm and with a view to generating a Fuller's curve artificially for each one are:
A. 0 - 0.250.
B. 0.250 - 1.25.
C. 1.25 - 2.
D. 2-4.
E. 4-8.
F. 8 -16.
G. 16 - 22.

100% Portland cement or else mixed with calcium aluminate cement, with a total amount of cement in the sample of between 7 and 20% of the total weight of the sample. The Portland mix may end up being:
Portland → 70% ± 10% (type 42.5 or 52.5)
Aluminate → 30% ± 10%
Of the total amount of cement to be used.
A/C ratio → 0.45 ± 0,15.
Barite aggregate → 82 % ± 7 %.

In the case of making tiles with the mass of the invention, barite is used with the following granulometric fractions, so as to secure a curve as similar as possible to FULLER's, with the special feature that the smallest dimensional value must be at least 3 times the maximum size of the largest sized aggregate.
A. 0 - 0.250.
B. 0.250 - 1.25.
C. 1.25 - 2.
D. 2-4.
E. 4 - 8.

As regards producing dry process mortar, barite is used with the following granulometric fractions, with the same idea of obtaining a curve as similar as possible to FULLER's;
A. 0 - 0.250.
B. 0.250 - 1.25.
C. 1.25 - 2.

The results contained in the above tables were obtained with samples that have given such densities, when fresh and after vibrating, as those stated below:
M1 → 3.62 Kg/dm³.
M2 → 3.54 Kg/dm³.
M3 → 3.44 Kg/dm³.
M5 → 3.49 Kg/dm³.

In the process of producing the samples, in order to achieve high consistency and, as a consequence of this, high absorption is fundamental, except in spray mortar, and the type of vibrating, principally as far as concerns the frequency of this.

Being a high density aggregate, this vibrating must be high frequency, in excess of 3000 r.p.m., with the frequency rising in proportion to the size of the aggregate, up to 7000 r.p.m. This vibrating prevents the disaggregation of the aggregate, keeps the aggregate in its place in the mass, eliminates the occlusion of air, and directs the fine fraction towards the periphery.

## Claims

1. Heavy mass for the execution of radioprotection barriers in an X-ray environment, such as closures for X-ray rooms, with energies in which the photoelectric effect is applied, a mass in the form of dry mortar for manual or spray application, bricks, tiles or blocks, which, being of the type that incorporate cement, aggregate, water and chemical additives varying in accordance with the characteristics that may be required for said mass, such as strength, setting time, and others, **characterised in that** barite takes part in it as an aggregate, in a suitable proportion according to the increase in the general density of the mass to be obtained, a highly continuous grain size being envisaged for this barite.

2. Heavy mass for the execution of radioprotection barriers in an X-ray environment, according to claim 1, **characterised in that** in the event of the mass being intended to make tiles, bricks or blocks, a system of differential vibrating is applied to it in order to obtain optimal consistency in the mass.

3. Heavy mass for the execution of radioprotection barriers in an X-ray environment, according to claim 1, **characterised in that** for producing bricks from the mass, barite is used with the following granulometric fractions expressed in mm, for obtaining a curve as similar as possible to FULLER's, with the special feature that the smallest dimensional value of the brick must be at least 3 times the maximum size of the largest sized aggregate.
A. 0 - 0.250.
B. 0.250 - 1.25.
C. 1.25 - 2.
D. 2-4.
E. 4 - 8.
F. 8 - 16.
G. 16 - 22.

4. Heavy mass for the execution of radioprotection barriers in an X-ray environment, according to claim 1, **characterised in that** for producing tiles from the mass, barite is used with the following granulometric fractions expressed in mm, for obtaining a curve as similar as possible to FULLER's, with the special feature that the smallest dimensional value of the brick must be at least 3 times the maximum size of the largest sized aggregate.
A. 0 - 0.250.
B. 0.250 - 1.25.
C. 1.25 - 2.
D. 2-4.
E. 4 - 8.

5. Heavy mass for the execution of radioprotection barriers in an X-ray environment, according to claim 3, **characterised in that** in the event of the size of the panel to be obtained being large in area, the mass will also incorporate metal fibre embedded in it.

6. Heavy mass for the execution of radioprotection barriers in an X-ray environment, according to claim 1, **characterised in that** for producing dry process mortar, barite is used with the following granulometric fractions expressed in mm, for obtaining a curve as similar as possible to FULLER's;
A. 0 - 0.250.
B. 0.250 -1,25.
C. 1.25 - 2.
Electrowelded mesh may also be incorporated, with suitable wire and mesh size in accordance with the required application.
